Europäisches Patentamt

European Patent Office

Office européen des brevets

Veröffentlichungsnummer: **0 297 331**

**A1**

# EUROPÄISCHE PATENTANMELDUNG

Anmeldenummer: **88109362.9**

Anmeldetag: **13.06.88**

Int. Cl.⁴ **B65G 17/20 , E01B 25/22**

Priorität: **01.07.87 DE 3721658**

Veröffentlichungstag der Anmeldung:
**04.01.89 Patentblatt 89/01**

Benannte Vertragsstaaten:
**CH DE FR IT LI**

Anmelder: **LOUIS SCHIERHOLZ GMBH & CO.KG**
**Arsterdamm 110**
**D-2800 Bremen 61(DE)**

Erfinder: **Langen, Manfred**
**Schulstrasse 58**
**D-4050 Mönchengladbach(DE)**
Erfinder: **Gebald, Gregor**
**Lepperschütte 49**
**D-4050 Mönchengladbach(DE)**
Erfinder: **Wenger, Hartmut**
**Speckmannsweg 8**
**D-3008 Garbsen 7(DE)**
Erfinder: **Grote, Horst**
**Syker Strasse 183 E**
**D-2870 Delmenhorst(DE)**

Vertreter: **von Creytz, Dietrich, Dipl.-Phys.**
**Tannenweg 25**
**D-5144 Wegberg-Beeck(DE)**

Laufschienenanordnung eines Hängefördersystems.

Eine Laufschienenanordnung eines Hängefördersystems für einen auf Rädern (7) rollenden Trolleyzug (6) läßt sich bei aus Kardangelenken mit Zwischenstücken (33) bestehendem Trolleyzug (6) selbstzentrierend ohne das Erfordernis von Gegendrucklagern im Schienenbereich im wesentlichen staubdicht abgeschlossen ausbilden, wenn ein aus zwei in Fahrtrichtung des Trolleyzugs (6) parallelen Laufschienen (1) mit je einer Fahrfläche (19) für die Räder (7) aufgespanntes, bis auf einen Längsschlitz (24) für einen nach unten gerichteten Transportträger im wesentlichen geschlossenes Gehäuse (5) vorgesehen wird.

Fig 2

## "Laufschienenanordnung eines Hängefördersystems"

Die Erfindung betrifft eine Laufschienenanordnung eines Hängefördersystems für einen auf Rädern rollenden Trolleyzug, an dem zu förderndes Gut aufzuhängen ist. Sie betrifft ferner die Verwendung der Laufschienenanordnung als Transportmittel.

Laufschienenanordnungen mit Hängeförderung finden in der Fördertechnik in vielen Teilen von Industrie und Handel, insbesondere bei Automatisierung, verbreitete Anwendung. Solche Förderanlagen dienen als Verbindung zwischen in einem Herstellungs- oder Bearbeitungszug aufeinanderfolgender Maschinen, zwischen Produktions- oder Verpackungsmaschinen und einem Lager, innerhalb eines Lagers usw.. Erhebliche Bedeutung haben Laufschienenanordnungen mit Hängeförderung in der Textilindustrie, wo es häufig vermieden werden soll, daß sich die hergestellten und zu transportierenden Produkte gegenseitig berühren und dadurch beschädigen. In solchen Fällen wird eine hängende Förderung einer Förderung im liegenden Zustand vorgezogen, weil dann besondere, eine gegenseitige Beeinträchtigung der transportierten Teile verhindernde Schutzmaßnahmen nicht erforderlich sind.

Der Erfindung liegt die Aufgabe zugrunde, ein Hängefördersystem mit einem Trolleyzug zu - schaffen an dem die zu fördernden Güter aufzuhängen sein sollen. Das Fördersystem soll nach dem Baukastenprinzip konzipiert und montierbar sein, möglichst optimale Belastungswerte besitzen, in Vertikal- und Horizontal bogen verlegbar sein, einen Trolleyzug selbstzentrierend führen können, ein gesondertes Gegendrucklager gegen eventuelle beim Einkuppeln auftretende vertikal nach oben gerichtete Kräfte nicht erfordern und gegen Verschmutzung aus der Umgebung möglichst gut geschützt sein. Bei Anwendung in der Textilindustrie ist die letzte der vorstehenden Forderungen besonders wichtig, weil in Textilbetrieben die Gefahr einer Verschmutzung der Laufschienenanordnung, beispielsweise durch Feinstaub-, Faser- und Avivageablagerungen, besonders groß ist. Da aber ein solcher Schutz nicht vollkommen sein kann, ist eine Konstruktion erwünscht, die zugleich auf einfache Weise, insbesondere automatisch, zu reinigen ist.

Für die eingangs genannte Laufschienenanordnung mit auf Rädern rollendem Trolleyzug besteht die erfindungsgemäße Lösung darin, daß ein aus zwei in Fahrtrichtung des Trolleyzugs parallelen Laufschienen mit je einer Fahrfläche für die Räder aufgespanntes, bis auf einen Längsschlitz für einen nach unten gerichteten Transportträger im wesentlichen geschlossenes Gehäuse vorgesehen ist, daß die Laufschienen jeweils aus einem einen U-förmigen Querschnitt besitzenden U-Profil mit parallelen U-Schenkeln bestehen und mit ihrer U-Öffnung einander zugewandt sind, daß die beiden Fahrflächen innerhalb des Gehäuses jeweils auf dem einen U-Schenkel angeordnet und quer zur Fahrtrichtung voneinander weg geneigt sind und daß an der Innenfläche des anderen U-Schenkels jeder Laufschiene eine zu der Fahrfläche parallele und ihr in Bezug auf ein darauf rollendes Rad gegenüberliegende Gegendruckfläche in einem gerade ein freies Rollen erlaubenden Abstand vorgesehen ist.

Durch die Erfindung wird eine Laufschienenanordnung mit einem im wesentlichen geschlossenen und damit entsprechend gut gegen ein Eindringen von Verschmutzungen abgedichteten Umfangsprofil geschaffen, aus dem nach unten lediglich ein Transportträger, das heißt ein Verbindungsstück zu einer zu transportierenden Ware, herausragt. Im Prinzip wird also lediglich ein Schlitz bzw. Spalt an der Unterseite der Anordnung benötigt, durch die die Transportträger als Kupplungsstück für eine zu transportierende Ware hindurchtreten. Ein wesentlicher Vorteil besteht auch darin, daß die Fahrflächen innerhalb des Profils, insbesondere um etwa 90°, voneinander weg geneigt sind, so daß die vorzugsweise paarweise am Trolleyzug fest oder beweglich angebrachten Laufräder als selbstzentrierende Rollen ausgebildet sind.

Das erfindungsgemäße im wesentlichen geschlossene Profil mit darin in Längsrichtung auf Rädern rollend gelagertem Trolleyzug vereinigt die Vorteile der selbstzentrierenden Lagerung auf den einen Bestandteil des Profils bildenden Fahrflächen damit, daß die den Fahrflächen bezüglich der Rollen gegenüberliegenden Innenwände des Profils zugleich als Gegendrucklager auszubilden sind, so daß beim Ein- oder Auskuppeln einer zu transportierenden Ware nicht die Gefahr eines Entgleisens oder dergleichen des Trolleyzugs besteht. Der gegenseitige Abstand der Fahrfläche zu der zugehörigen Gegendruckfläche soll zu diesem Zweck lediglich gerade so groß sein, daß die Räder frei an der Fahrfläche abrollen können aber schon bei leichtem Druck in Richtung von unten nach oben an die Gegendruckfläche anstoßen.

Ein Profil der erfindungsgemäßen Art läßt sich vorzugsweise aus zwei im Prinzip gleich, insbesondere auch in einer Rechts- und Linksversion, ausgebildeten Laufschienen herstellen. Jede der Laufschienen muß dann eine Fahrfläche und eine dieser gegenüberliegende Gegendruckfläche besitzen. Außerdem muß die Laufschiene für die Förderaufgabe ausreichend fest mit der anderen Laufschiene bzw. mit einer Schienenaufhängung zu verbinden sein. Eine besonders bevorzugte und leicht montierbare Verbindung wird erhalten, wenn jede der Laufschienen eine Nut zum Aufstecken auf eine Feder eines Schienen-Verbindungsstücks besitzt und wenn diese Verbindung mit einer Paßfeder und oder Verschraubung oder dergleichen zu sichern ist. Ferner kann es günstig sein, im Körper jeder der Laufschienen Biegelinien vorzusehen, um eine für eine Selbstzentrierung auch von Schienenstößen wichtige Elastizität zu erhalten. Solche Biegelinien können im Rahmen der Selbstzentrierung und Formerhaltung besondere Bedeutung finden, wenn die Laufschiene bzw. das aus Laufschienen und Schienenaufhänger bestehende Bauteil Horizontal- und oder Vertikalbogen durchlaufen soll.

Gemäß weiterer Erfindung werden die Laufschienen und gegebenenfalls die die Schienen bei Anwendung verbindende Schienenaufhängung als Strangpreßprofil aus Aluminium hergestellt. Solche Profile haben den Vorteil, daß sie in gewissem Maße biegbar sind. Insbesondere in der Kombination als praktisch vollständig geschlossenes Profil gemäß vorliegender Erfindung sind bei Herstellung der Laufschienen als Aluminium-Strangpreßprofil minimale Krümmungsradien von 500 bis 800 mm bei Horizontal- bzw. Vertikalbogen zu erreichen. Es können sogar durch gleichzeitige Krümmung in horizontaler und vertikaler Richtung Wendel erzeugt werden, derart, daß eine erfindungsgemäße Laufschienenanordnung wendelförmig von einer in eine nächste Etage einer Maschine oder Fabrikationsanlage führen kann.

Die erfindungsgemäße Laufschienenanordnung ist insbesondere bei Anwendung in der Textilindustrie, gegen ein Eindringen von staub- oder dampfförmigen Verschmutzungen gut abgedichtet und zugleich automatisch zu reinigen. Günstig ist es beispielsweise für die Reinhaltung der Schienen, wenn am Trolleyzug, z. B. an dessen Längsenden, Reinigungsbürsten oder dergleichen befestigt werden. Auch dem Zug selbst können mit Vorteil Reinigungsmittel, z. B. Saug-, Blas- und oder Bürstvorrichtungen, insbesondere in einer Durchlaufwaschanlage oder dergleichen, zugeordnet werden. Derartige Service-oder Reinigungsstationen können in die Laufschienenanordnung integriert werden. Für einen automatischen Betrieb günstig ist eine rechnergesteuerte und gegebenenfalls an den Verschmutzungsanfall anpassungsfähige Intervallreinigung, durch die also - besonders in der Textilindustrie - eine Schnur- oder Filzbildung von vornherein ausgeschlossen wird. Weiterhin kann der Trolleyzug in der erfindungsgemäßen Laufschienenanordnung mitHilfe von gegebenenfalls von oben auf den Zug wirkenden Reibrädern, die in der Laufschiene in einem gegenseitigen Abstand von weniger als der Zuglänge anzuordnen sind.

angetrieben werden. Vorzugsweise besteht dann der Antrieb jeweils aus einem Motor mit angeflanschtem Untersetzungsgetriebe, der über das Reibrad den Trolleyzug sowohl in Vorwärts- als auch in Rückwärtsrichtung bewegen können soll. Selbstverständlich soll die dem Reibrad zugewndte Fläche des Zugs, insbesondere dessen Oberseite, für diese Antriebsart ausgelegt werden. Der Reibradantrieb soll auch so einstellbar sein, daß richtungsabhängig ein ausreichendes beschleunigendes oder bremsendes Moment zu übertragen ist. Um zu erreichen, daß nur die Reibradantriebe laufen, die gerade zum Vorschub bzw. zum Bremsen eines Zuges benötigt werden, können kurz vor und nach jedem Reibrad Sensoren angebracht werden, die den Anfang und das Ende eines Zugs erfassen und den Reibradantrieb in der für die Zugbewegung richtigen Richtung in Bewegung setzen und nach Ende des Zuges wieder stillsetzen. Schließlich kann in die Laufschienenanordnung eine Schreib-Lese-Einheit integriert werden, die eine berührungslose Zielinformation eines am Trolleyzug befestigten Datenträgers lesen bzw. einschreiben kann.

Wenn ein Reibradantrieb aus irgendeinem Grunde nicht erwünscht ist, läßt sich der Trolleyzug auch mit einer Art Lokomotive oder als Elektro-Hänge-Bahn antreiben. Weiterhin kann der jeweilige Antrieb ein- oder ausrückbar ausgebildet werden, um einen Nothalt oder ein Teilen des Trolleyzugs, eventuell für einen separaten Antrieb oder für Handbetrieb, zu ermöglichen.

Anhand der schematischen Darstellung in der beiliegenden Zeichnung werden Einzelheiten der Erfindung erläutert. Es zeigen:

Fig. 1 einen Querschnitt durch das Profil einer Laufschienenanordnung;

Fig. 2 einen Querschnitt durch das Profil einer Laufschienenanordnung mit eingesetztem Trolleyzug und darauf wirkendem Reibradantrieb;

Fig. 3 und Fig. 4 einen Querschnitt und eine Draufsicht auf ein Räderpaar eines Trolleyzugs;

Fig. 5 einen Querschnitt durch ein Kettenglied eines Trolleyzugs;

Fig. 6 und Fig. 7 zwei Querschnitte durch ein zwei Kettenglieder nach Fig. 5 verbindende Distanzstücke eines Trolleyzugs.

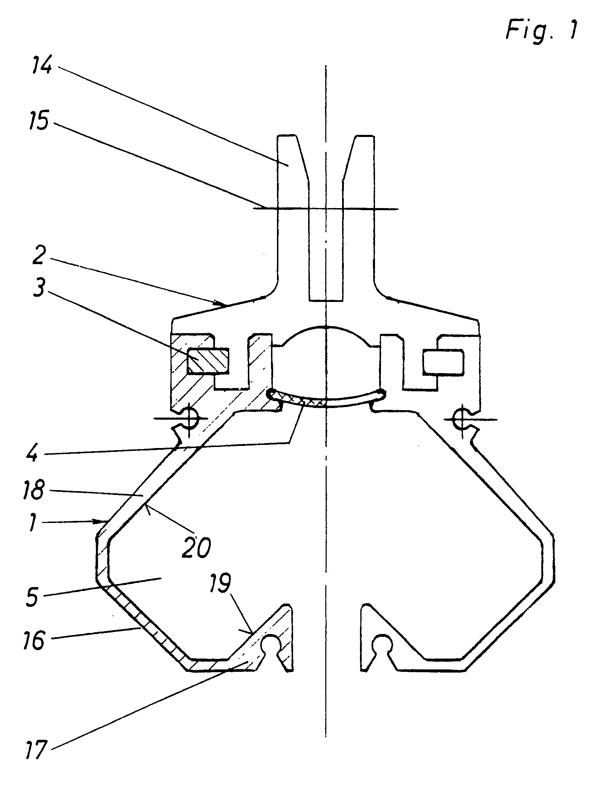

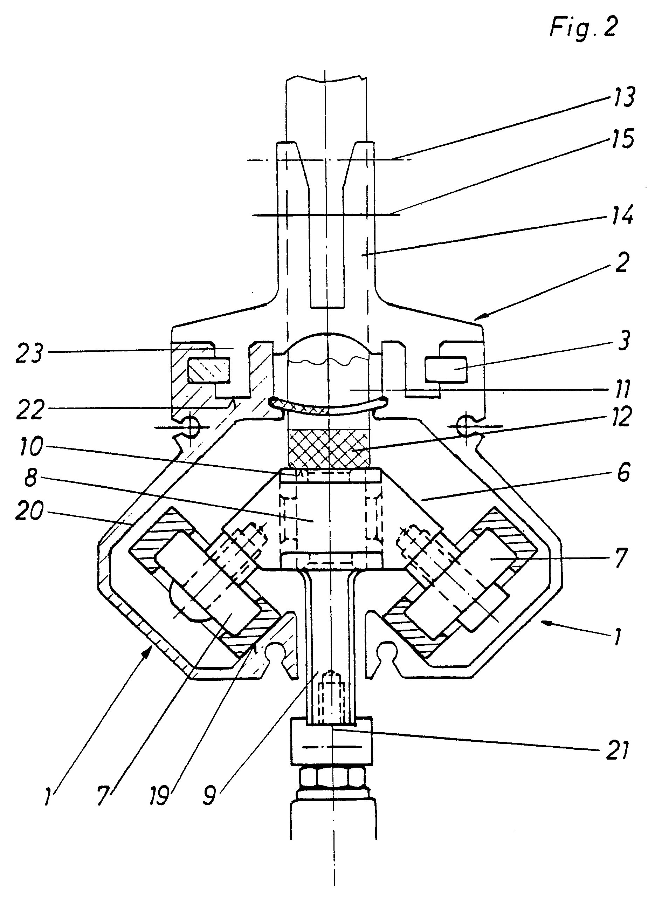

Das Profil der in Fig. 1 und 2 im Querschnitt dargestellten Laufschienenanordnung besteht aus den beiden insgesamt mit 1 bezeichneten Laufschienen, einem insgesamt mit2 bezeichneten Schienenverbindungsstück je einem paßfederartigen Verbinder 3 und einer Staubabdeckung 4. Der Verbinder 3 kann auch durch Mittel zum Verschrauben der Einzelteile ersetzt werden. Nach Fig. 2 wird in das im wesentlichen von den Laufschienen 1 umschlossene Gehäuse 5 ein insgesamt mit 6 bezeichneter Trolleyzug mit einem Paar von Rollen 7 eingesetzt. Der Trolleyzug 6 enthält einen Zugkörper 8 mit daran unten angesetztem Kupplungsstück 9. Auf die im wesentlichen eben ausgelegte Rückenfläche 10 des Zugkörpers 8 wirkt in dem in Fig. 2 dargestellten Querschnitt des Schienenverbindungsstücks 2 ein Antriebsrad 11 mit Friktionsbelag 12. Die Achse des Antriebsrads 11 wird mit 13 bezeichnet. Die ganze Anordnung nach Fig. 1 und 2 kann mit einer angeformten Gabel 14 und mit Hilfe einer längs der Linie 15 vorgesehenen Schraube an der Decke, an einem Traggestell oder dergleichen aufgehängt werden.

Jede der Laufschienen 1 besteht aus einem annähernd U-förmigen Profil mit einem ersten, kurzen Schenkel 17 und einem zweiten, langen Schenkel 18. Die Öffnungen der beiden U-Profile 16 werden einander so zugewendet, daß sie das Gehäuse 5 des im wesentlichen geschlossenen Gesamtprofils aufspannen. Auf der Innenfläche des kurzen Schenkels 17 jeder der Laufschienen 1 wird eine Fahrfläche 19 vorgesehen. Die der Fahrfläche 19 gegenüberliegende Innenfläche des langen Schenkels 18 jeder der Laufschienen 1 wird als Gegendruckfläche 20 ausgebildet. Bei Betrieb laufen die Rollen 7 auf den Fahrflächen 19, ohne die Gegendruckflächen 20 zu berühren. Wenn jedoch zum Lösen oder Befestigen eines zu transportierenden Guts eine Kraft in Pfeilrichtung 21 nach oben auf das Kupplungsstück 9 ausgeübt wird, sorgen die bei Betrieb des Trolleyzugs 6 nicht berührten Gegendruckflächen 20 dafür, daß die Rollen 7 nicht aus ihrer Bahn entgleisen können.

Die beiden Laufschienen 1 werden im Ausführungsbeispiel mit Hilfe einer an dem freien Ende von der im langen Schenkel 18 angebrachten Nut 22 auf eine am Maschinenverbindungsstück 2 vorgesehene Feder 23 aufgesetzt und an dieser mit Hilfe des Verbinders 3 so festgelegt, daß eine gegenseitige Bewegung nicht mehr möglich ist. Die Anordnung wird dabei so getroffen, daß das Gehäuse 5 bis auf einen Schlitz 24 im unteren Bereich, der dazu dient, einen nach unten gerichteten Transportträger, insbesondere das Kupplungsstück 9, nach außen zu führen, geschlossen.

Eine durch die Erfindung erstrebte einfache Montierbarkeit nach dem Baukastenprinzip mit Klemm-, Schraub oder Preßverbindungen sowie eine Aufhängung an beliebiger Stelle werden erreicht, wenn die durch die langen Schenkel 18 und die Böden der U-Profile 16 aufgespannten Ebenen im wesentlichen ein Prisma mit etwa quadratischem, auf einer Spitze stehendem Querschnitt umschließen. Die beiden oberen Flächen dieses auf der Spitze stehenden Prismas dienen dann auf der Innenseite als Gegendruckflächen 20, während die zum Bilden des Schlitzes 24 verkürzten unteren Flächen des Prismas - in einem Abstand von der Ebene der Gegendruckfläche 20 von nur wenig mehr als einem Rollendurchmesser - (um 90°) nach innen umgelegt sind, um auf der Innenfläche die Fahrflächen 19 der Rollen 7 zu schaffen.

In der Gesamtkonstruktion des aus den Laufschienen 1 gebildeten Gehäuses 5 sind also mehrere Aufgabenlösungen vereint. Jede der Laufschienen 1 liefert erstens eine Lauffläche 19 für eine Rolle 7 und zweitens eine entsprechende Gegendruckfläche 20 um ein Entgleisen der Rolle 7 auszuschließen. Drittens wird durch die U-Form der Laufschienen 1 damit durch die geschlossene Form des Gehäuses 5 erreicht, daß der Raum angrenzend an den Trolleyzug gegenüber Staubeinwirkungen von außen geschützt ist und viertens die Umgebung, insbesondere mitgeführte Ware, gegenüber einer Verschmutzung von dem Trolleyzug her, etwa durch herabtropfendes Öl, geschützt, weil die kurzen Schenkel 17 nach oben umgekantet werden sollen.

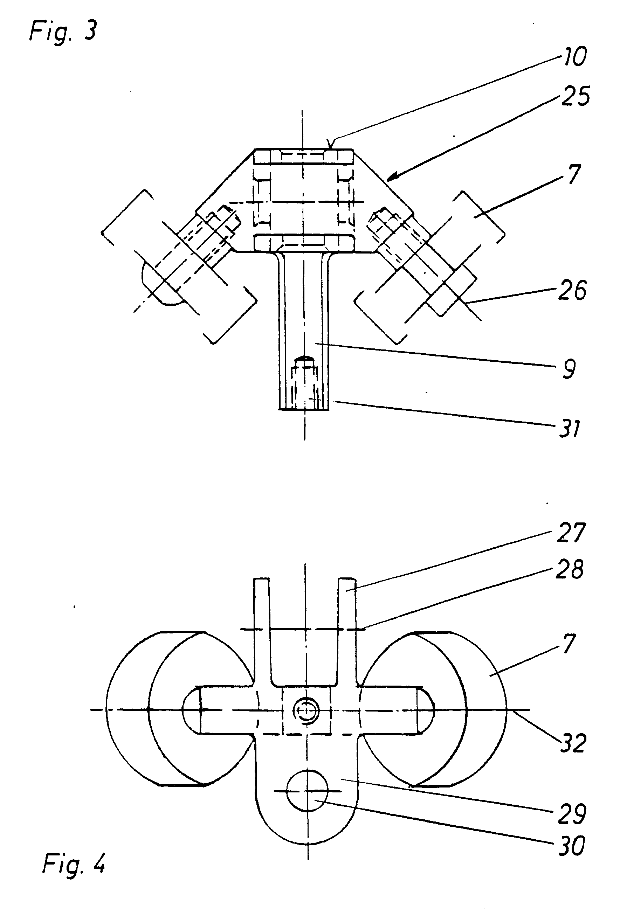

Ein ein Paar von Rollen 7 besitzendes Kardan- bzw. Kettenglied 25 eines Trolleyzugs 6 wird in Fig. 3 im Querschnitt und in der Draufsicht - schematisch dargestellt. Die Rollen 7 können sowohl fest als auch beweglich am Kettenglied montiert werden. Die gegenseitige Neigung der Rollen 7 bzw. von deren Achsen 26 entspricht möglichst genau der gegenseitigen Neigung der beiden Fahrflächen 19 bzw. der Gegendruckflächen 20 der Laufschienenanordnung 1 nach Fig. 1 und 2. Das Kettenglied 25 nach Fig. 3 und 4 besitzt auf der einen Seite eine Gabel 27 zum Einsetzen einer Lasche mit in der Zeichnungsebene verlaufender Bohrungslinie 28. An der anderen Seite des Kettenglieds befindet sich eine Gabel 29 mit einer vertikal zur Zeichnungsebene verlaufenden Bohrung 30. An der Unterseite des Kettenglieds 25 wird das Kupplungsstück 9 angeformt. Dieses kann am unteren Ende eine Aufnahmebohrung 31 zum Ansetzen eines Kuppelstücks der jeweiligen Ware besitzen.

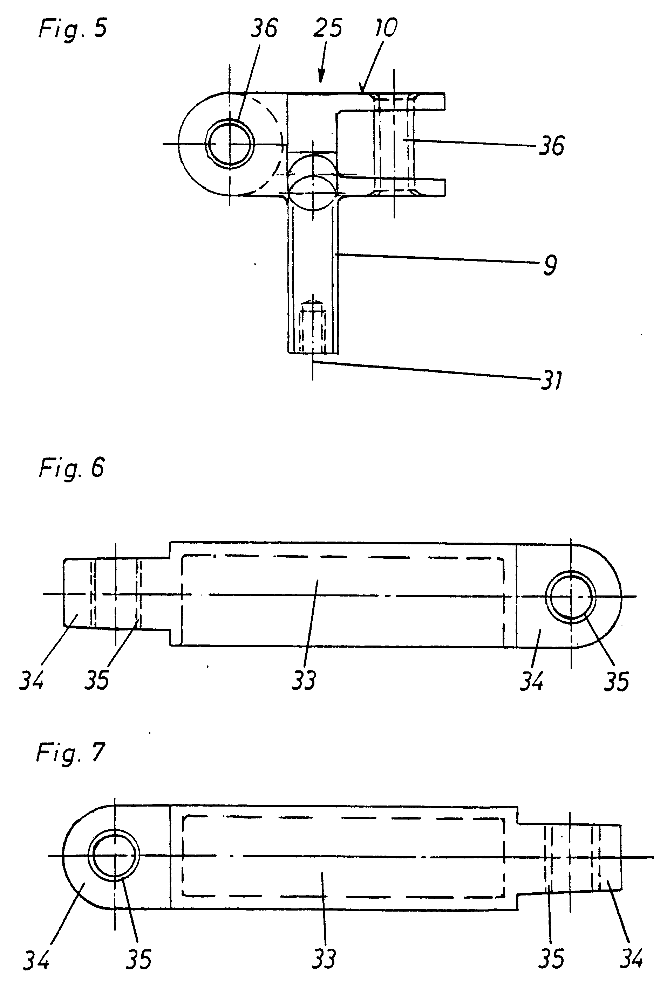

Für den Fall, daß in der Textilindustrie Hülsen oder Spulen, insbesondere Flyerhülsen und Flyerspulen, transportiert werden sollen, kann in die Aufnahme 31 eine in die jeweilige Hülse axial einzuführende Drehaufhängung nach Casablanca-Art oder dergleichen eingeschraubt werden. Ein Querschnitt des Kettenglieds 25 nach Fig. 3 und 4 in Richtung parallel zur Verbindungslinie 32 der beiden Rollen 7 wird in Fig. 5 schematisch dargestellt. In der Zeichnung werden die Rollen 7 auf fest mit dem Kettenglied 25 verbundenen Achsen 26 gelagert. Bei in gewisser Weise beweglicher Befestigung der Achsen 26 wird vor allem bei gekrümmter Laufschienen-Fahrtrichtung ein ruhigerer Zuglauf erreicht.

Die in Fig. 4 und 5 gezeichneten Kettenglieder 25 können mit Zwischenstücken 33 nach Fig. 6 und 7 zu einem Trolleyzug ergänzt werden, der zugleich eine für einen Reibradantrieb oder dergleichen ebene Reibfläche auf der Oberseite besitzt und in vertikaler sowie horizontaler Richtung beliebig wie ein Regenwurm zu bewegen ist. Die Zwischenstücke 33 nach Fig. 6 und 7 besitzen die zum Einkuppeln in die Gabeln 27 und 29 des Kettenglieds 25 vorgesehenen Laschen 34 mit Bohrungen 35. Die Bohrungen 35 können mit Hilfe der Bolzen 36 (Fig. 5) mit dem Kettenglied 25 verbunden werden.

Bezugszeichenliste

1 = Laufschiene
2 = Schienenverbindung
3 = Verbinder
4 = Staubabdeckung
5 = Gehäuse
6 = Trolleyzug
7 = Rolle
8 = Zugkörper
9 = Kupplungsstück
10 = Reibfläche
11 = Antriebsrad
12 = Friktionsbelag
13 = Achse (11)
14 = Gabel
15 = Bohrungslinie
16 = U-Profil
17 = kurzer Schenkel
18 = langer Schenkel
19 = Fahrfläche
20 = Gegendruckfläche
21 = Pfeilrichtung
22 = Nut
23 = Feder
24 = Schlitz
25 = Kettenglied
26 = Achse (7)
27 = Gabel
28 = Bohrungslinien
29 = Gabel
30 = Bohrung
31 = Aufnahme
32 = Verbindungslinie
33 = Zwischenstück
34 = Lasche
35 = Bohrung
36 = Bolzen

**Ansprüche**

1. Laufschienenanordnung eines Hängefördersystems für einen auf Rädern (7) rollenden Trolleyzug (6), an dem zu förderndes Gut aufzuhängen ist,
**dadurch gekennzeichnet,**
daß ein aus zwei in Fahrtrichtung des Trolleyzugs (6) parallelen Laufschienen (1) mit je einer Fahrfläche (19) für die Räder (7) aufgespanntes, bis auf einen Längsschlitz (24) für einen nach unten gerichteten Transportträger (9) im wesentlichen geschlossenes Gehäuse (5) vorgesehen ist, daß die Laufschienen (1) jeweils aus einem einen U-förmigen Querschnitt besitzenden U-Profil (16) mit parallelen U-Schenkeln (17, 18) bestehen und mit ihrer U-Öffnung einander zugewandt sind, daß die beiden Fahrflächen (19) innerhalb des Gehäuses (5) jeweils auf dem einen U-Schenkel (17) angeordnet und quer zu der Fahrtrichtung voneinander weg geneigt sind und daß an der Innenfläche des anderen U-Schenkels (18) jeder Laufschiene (1) eine zu der Fahrfläche (16) parallele und ihr in Bezug auf ein darauf rollendes Rad (7) gegenüberliegende Gegendruckfläche (20) mit einem gerade ein freies Rollen erlaubenden Abstand vorgesehen ist.

2. Anordnung nach Anspruch 1,
**dadurch gekennzeichnet,**
daß die beiden Fahrflächen (19) um etwa 90° voneinander weg geneigt sind.

3. Anordnung nach Anspruch 1 oder 2,
**dadurch gekennzeichnet,**
daß die die Fahrflächen (19) tragenden ersten Schenkel (17) des U-Profils (16) mit ihrem freien Ende an den Längsschlitz (24) angrenzen.

4. Anordnung nach einem oder mehreren der Ansprüche 1 bis 3,
**dadurch gekennzeichnet,**
daß die die Gegendruckfläche (20) aufweisenden zweiten Schenkel (18) des U-Profils (16) an einer beide Laufschienen (1) verbindenden Schienenaufhängung (2) zu befestigen sind.

5. Anordnung nach einem oder mehreren der Ansprüche 1 bis 4,
**dadurch gekennzeichnet,**
daß jeder in dem U-Profil (16) zu fahrende Trolleyzug (6) mindestens je ein Räderpaar mit je einem auf den Fahrflächen (19) abzurollenden Rad (7) besitzt.

6. Anordnung nach Anspruch 5,
**dadurch gekennzeichnet,**
daß die Achsen (26) der Rollen (7) im Körper des jeweiligen Kettengliedes (25) beweglich gelagert sind.

7. Anordnung nach Anspruch 2 und 5 oder 6,
**dadurch gekennzeichnet,**
daß die Achsen (26) der Räder (7) jedes Räderpaars um etwa 90° gegeneinander geneigt sind.

8. Anordnung nach einem oder mehreren der Ansprüche 5 bis 7,
**dadurch gekennzeichnet,**

daß in der Schienenaufhängung (2) ein Antrieb (11) für den jeweiligen Trolleyzug (6) bzw. für die daran hängende Ware integriert ist.

9. Anordnung nach Anspruch 8.

**dadurch gekennzeichnet,**

daß ein Reibradantrieb mit symmetrisch zwischen die Räder (7) jeden Räderpaars an einer Reibfläche (10) des Trolleyzugs (6) angreifendem Reibrad (11) vorgesehen ist.

10. Anordnung nach einem oder mehreren der Ansprüche 1 bis 9,

**dadurch gekennzeichnet,**

daß der Trolleyzug (6) aus einer Kette von Kardangelenken mit vorzugsweise auswechselbaren Zwischenstücken (33) besteht.

11. Anordnung nach Anspruch 9 oder 10.

**dadurch gekennzeichnet.**

daß die obere Fläche (10) des Trolleyzugs (6) eine im wesentlichen durchgehende. glatte Angriffs- bzw. Reibfläche (l0) des Reibrades (11) bildet.

12. Anordnung nach einem oder mehreren der Ansprüche 1 bis 11.

**dadurch gekennzeichnet,**

daß der Körper des U-Profils (16) der Laufschienen (1) als Strangpreßprofil aus Aluminium ausgebildet ist.

13. Anordnung nach Anspruch 12.

**dadurch gekennzeichnet,**

daß ein vertikal- und oder horizontal verwindungsfrei biegbares U-Profil (16) vorgesehen ist.

14. Anordnung nach Anspruch 13.

**dadurch gekennzeichnet,**

daß ein horizontal und oder vertikal mit einem Krümmungsradius bis herab zu 800 bzw. 500 mm gebogenes U-Profil (16) vorgesehen ist.

15. Anordnung nach einem oder mehreren der Ansprüche 1 bis 14.

**dadurch gekennzeichnet,**

daß an den Längsenden des Trolleyzugs (6) eine Reinigungsbürste für die Reinigung der Innenfläche des Gehäuses (5) befestigt ist.

16. Anordnung nach einem oder mehreren der Ansprüche 1 bis 15.

**dadurch gekennzeichnet,**

daß in den Weg des Trolleyzugs eine Service- oder Reinigungsstation integriert ist.

17. Verwendung der Laufschienenanordnung nach einem oder mehreren der Ansprüche 1 bis 16. als Transportmittel für hängend geförderte Spulen oder Hülsen in der Textilindustrie. insbesondere für Flyerspulen.

Fig. 1

*Fig. 2*

Fig. 3

10
25
7
26
9
31

27
28
7
32
29
30

Fig. 4

Fig. 5

Fig. 6

Fig. 7

| | EINSCHLÄGIGE DOKUMENTE | | EP 88109362.9 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) | |
| X | <u>CH - A - 498 758</u> (BAND)<br>    * Fig. 1; Anspruch 1; Spalte 3, Zeilen 24-27 * | 1-5,7 | B 65 G 17/20<br>E 01 B 25/22 | |
| Y | | 8,9 | | |
| | -- | | | |
| Y | <u>AT - B - 361 393</u> (DÜRKOPPWERKE)<br>    * Fig. 3 * | 8,9 | | |
| | -- | | | |
| Y | <u>AT - B - 312 501</u> (DEMA)<br>    * Fig. 1,6 * | 1-5,7 | | |
| | -- | | | |
| Y | <u>DE - A1 - 3 510 955</u> (GÄRTNER)<br>    * Fig. 1 * | 1-5,7 | | |
| | ---- | | RECHERCHIERTE SACHGEBIETE (Int. Cl.4)<br><br>B 65 G<br>E 01 B | |

Der vorliegende Recherchenbericht wurde für alle Patentansprüche erstellt.

| Recherchenort | Abschlußdatum der Recherche | Prüfer |
|---|---|---|
| WIEN | 07-09-1988 | BAUMGARTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82